# EUROPÄISCHE PATENTSCHRIFT

(11) **EP 1 737 904 B1**
(45) Veröffentlichungstag und Bekanntmachung des Hinweises auf die Patenterteilung: **17.06.2009**
(21) Anmeldenummer: 05739620.2
(22) Anmeldetag: 13.04.2005
(51) Int. Cl.: C08J 11/08, B29B 17/02, C08J 3/14

(54) **VERFAHREN ZUM RECYCLING VON POLYESTERN ODER POLYESTERGEMISCHEN AUS POLYESTERHALTIGEN ABFÄLLEN**
METHOD FOR RECYCLING POLYESTERS OR POLYESTER MIXTURES FROM POLYESTER-CONTAINING WASTE
PROCEDE DE RECYCLAGE DE POLYESTERS OU DE MELANGES DE POLYESTERS FORMES DE DECHETS CONTENANT DES POLYESTERS

(30) Priorität: 15.04.2004 DE 102004018287
(43) Veröffentlichungstag der Anmeldung: 03.01.2007
(73) Patentinhaber: Fraunhofer-Gesellschaft zur Förderung der angewandten Forschung e.V., 80686 München (DE)
(72) Erfinder: MÄURER, Andreas, 85354 Freising (DE); KNAUF, Udo, 97119 Ochsenfurt (DE); WOLZ, Gerd, 82319 Starnberg (DE); FRANKL, Michael, 81241 München (DE); BECK, Otto, 85416 Langenbach (DE)
(86) Internationale Anmeldenummer: PCT/EP2005/003894
(87) Internationale Veröffentlichungsnummer: WO 2005/100460

(56) Entgegenhaltungen:
- EP-A- 0 742 251
- WO-A-01/36523
- WO-A-02/059189
- US-A- 3 696 058
- US-A- 3 701 741
- US-A- 4 003 880
- US-A1- 2003 119 925
- PATENT ABSTRACTS OF JAPAN Bd. 015, Nr. 377 (C-0870), 24. September 1991 (1991-09-24) & JP 03 152137 A (ASAHI CHEM IND CO LTD), 28. Juni 1991 (1991-06-28)

## Beschreibung

Die Erfindung betrifft ein Verfahren zum Recycling von Polyestern oder Polyestergemischen aus polyesterhaltigen Abfällen, bei dem der Polyester oder das Polyestergemisch in einem Solvens gelöst werden und anschließend rieselfähige Partikel hiervon mit einem Fällmittel ausgefällt werden. Dabei wird das Fällmittel so gewählt, dass eine anschließende Separation von Fällmittel und Solvens auf einfache Weise ermöglicht wird.

Mit dem steigenden Verbrauch von Polyethylenterephthalat (PET) für Verpackungsanwendungen, insbesondere in Folien- und Flaschenanwendungen fallen immer größere Mengen verschmutzter buntgefärbter PET-Abfälle an, die entsorgt oder recycelt werden müssen.

Während farblose transparente PET-Materialien, z.B.

Mehrweg- und Einweganwendungen für Mineralwässer oder Softdrinks mittels konventioneller werkstofflicher Recyclingverfahren (Zerkleinerung, Wäsche, VakuumTrocknung, ggf. Festphasen-Nachkondensation), so aufbereitet werden können, das mittlerweile auch ein Wiedereinsatz in der sensiblen Anwendung als Lebensmittelverpackung möglich ist, besteht kein Verfahren für vermischte bunt und teilweise opak eingefärbte post-consumer PET-Abfälle (inkl. Blends und Verbunde), das den PET-Wiedereinsatz als Lebensmittelverpackung technisch ermöglicht.

Neben den konventionellen werkstofflichen Recyclingverfahren wurden für PET neben den bekannten Solvolyseverfahren (Abbau des Polyesters in Monomerbausteine) in den letzten Jahren auch Lösemittel-basierte Verfahren entwickelt J.G. Poulakis, C.D. Papaspyrides: Dissolution/Reprecepitation: A Model Process for PET Bottle Recycling, Journal of Applied Polymer Science, Vol. 81, 91-95 (2001), EP 0 850 982, DE 100 177 07, US 5,866,622, wobei zumindest das letztgenannte Verfahren bedingt durch den dort unvermeidbaren Molmassenabbau eine Teil-Solvolyse darstellt.

Aus der nächstkommenden EP 0 742 251 ist ein Verfahren zur Wiedergewinnung von Polyesterpolymer aus einem Mischpolymer-Recyclingstrom bekannt, das ein in Kontakt Bringen des Polymergemisches mit einem chemischen Waschlösungsmittel und Trennen des daraus resultierenden kontaminierten chemischen Waschlösungsmittels vom restlichen Mischpolymer-Recyclingstrom, das Inkontaktbringen des restlichen Mischpolymer-Recyclingstroms mit einem weiteren Polyester-lösenden Solvens, das Trennen des Polyester-enthaltenden selektiven Solvens vom nicht gelösten Rückstand und das Trennen des so gewonnenen Polyesters umfasst. Bei der Verwendung der hier beschriebenen chemischen Waschlösungsmittel tritt hier jedoch das Problem auf, dass die teilweise Lösung des PET nicht verhindert werden kann.

Die konventionellen werkstofflichen RecyclingVerfahren genauso wie die bestehenden Lösemittelbasierten Verfahren bringen den Nachteil mit sich, dass nur eine unzureichende Abtrennung von Fremdpolymeren und anderen unerwünschten Störstoffen, wie z.B. Degradationsprodukten, Additiven, Füllstoffen oder Füllgutresten möglich ist. Damit wird eine hochwertige werkstoffliche Verwertung von PET-Abfällen aus gemischten Abfällen (sog. Post-Consumer-Sammlungen) verhindert.

Ein weiterer Nachteil beruht darauf, dass die aus dem Stand der Technik bekannten Verfahren eine thermische Aufbereitung der verwendeten Lösungs- und Fällmittel erfordern. Dies ist in Konsequenz mit einem hohen Energiebedarf dieses Verfahren verbunden.

Ausgehend von diesen Nachteilen des Standes der Technik war es Aufgabe der vorliegenden Erfindung ein Verfahren zum Recycling von Polyestern oder Polyestergemischen bereitzustellen, das es ermöglicht, Fremdpolymere abzutrennen und den Anteil von Störstoffen signifikant zu reduzieren. Dabei soll der Energiebedarf des Verfahrens und damit dessen Kosten gering gehalten werden.

Diese Aufgabe wird durch das Verfahren mit den Merkmalen des Anspruchs 1 gelöst. Die weiteren abhängigen Ansprüche zeigen vorteilhafte Weiterbildungen auf.

Erfindungsgemäß wird ein Verfahren zum Recycling von Polyestern oder Polyestergemischen aus Polyesterhaltigen Abfällen mit den folgenden Schritten bereitgestellt:
a) Friktionswäsche der Abfälle mit einem Solvens für den Polyester oder das Polyestergemisch,
b) Auflösen des Polyesters in einem Solvens sowie
c) Ausfällung von rieselfähigen Partikeln des Polyesters oder des Polyestergemisches mit einem Fällmittel.

Das besondere Merkmal des erfindungsgemäßen Verfahrens beruht nun darauf, dass sich bei der Ausfällung das Fällmittel mit der Lösung des Polyesters oder Polyestergemisches einphasig mischt und sich beim anschließenden Abkühlen das Fällmittel und das Solvens in zwei Phasen trennen. Durch die Auftrennung in zwei Phasen wird eine einfache Separation von Fällmittel und Solvens ermöglicht, die anschließend ohne weitere Aufbereitung wieder für das Verfahren eingesetzt werden können. Somit wird auch eine bisher im Stand der Technik eingesetzte thermische Aufbereitung weitgehend reduziert. Hierdurch wird eine besonders energiesparende und kosteneffiziente Verfahrensführung ermöglicht.

Bevorzugt erfolgt die Mischung der Lösung des Polyesters oder Polyestergemisches mit dem Fällmittel bei der Ausfällung bei einer Temperatur von 180 bis 220° C. Anschließend wird dann das System auf 50 bis 120° C abgekühlt, wobei es gleichzeitig zur Ausbildung von zwei flüssigen Phasen kommt.

Vorzugsweise werden dann die beiden Phasen mechanisch separiert und können so für das Verfahren wieder eingesetzt werden.

Als bevorzugtes Fällmittel werden unpolare Substanzen eingesetzt. Hierunter sind besonders aliphatische Alkane, insbesondere n-Alkane oder iso-Alkane bevorzugt.

Die PET-Lösung wird durch Fällmittelzugabe gefällt, so dass rieselfähige PET-Partikel entstehen. Da die Fällpartikel ein hohes Schüttgewicht bei gleichzeitig hohem Oberflächen-Volumenverhältnis aufweisen, sind sie für eine anschließende diffusionskontrollierte Festphasen-Nachkondensation besonders geeignet.

Die erfindungsgemäße Fällmittelzugabe bringt den Vorteil mit sich, dass auf eine nachfolgende zeitintensive Nachkristallisation innerhalb des Festphasen-Nachkondensationsprozesses verzichtet werden kann. Weiterhin ist der erfindungsgemäße Fällprozess deutlich kostengünstiger. Während das Fällprodukt einer thermischen Fällung, das mechanisch nicht entfeuchtet werden kann und eine Trockensubstanz von ca. 30 % aufweist (70 %, d. h. die 2,33-fache Menge Lösungsmittel muss überdestilliert werden), beträgt die Trockensubstanz des mechanisch abgepressten mit Fällmittel gefällten Recyclats ca. 75 %, d. h. nur noch die 0,3-fache Lösungsmittelmenge muss thermisch aufbereitet werden. Dieser Vorteil wird mit nur 10 Gew.-%, bezogen auf die PET-Lösung, des Fällmittels erreicht.

Ein weiterer Vorteil der erfindungsgemäßen Fällmittelzugabe beruht darauf, dass sich im bei hoher Temperatur einphasigen Gemisch aus Lösungs- und Fällungsmittel eventuell noch vorhandene Polyolefinreste lösen, die dann bei der Abkühlung ausfallen und sich zwischen den beiden flüssigen Phasen sammeln. Da das gefällte PET als Sinkfraktion sedimentiert, ist eine weitere Abtrennung zur Qualitätsverbesserung leicht möglich.

Überraschenderweise konnte so gezeigt werden, dass durch Vorreinigen des Abfallgemisches mittels einer Lösemittel-Extraktion die Fremdpolymere effektiv abgetrennt und die unerwünschten Additive oder einmigrierten Störstoffe signifikant reduziert werden können. Durch Auflösen und gegebenenfalls Feinfiltration sowie anschließende Fällung mit einem geeigneten Fällmittel können die ungelösten inerten Partikel, Füllstoffe und gegebenenfalls weitere Störstoffe abgetrennt und die niedermolekularen löslichen Substanzen weiter minimiert werden, so dass ein reines PET-Recyclat produziert wird, das anschließend wie Neuware verarbeitet werden kann. Dabei ist das Verfahren aufgrund geringen Energiebedarfs bei der Lösemittelaufbereitung besonders wirtschaftlich.

Vorzugsweise wird die Friktionswäsche mit einem Solvens für den Polyester oder das Polyestergemisch bei niedriger Temperatur als die Lösetemperatur durchgeführt. Die Temperatur der Friktionswäsche liegt dabei besonders bevorzugt im Bereich zwischen 50 und 150 °C und besonders bevorzugt zwischen 100 bis 120 °C.

Als Solvens wird bevorzugt ein Dicarbonsäuredialkylester oder ein Dicarbonsäuredialkylestergemisch verwendet. Hierunter sind Dialkylester, insbesondere Dimethylester oder Diethylester von Oxalsäure, Malonsäure, Bernsteinsäure, Glutarsäure und/oder Adipinsäure bevorzugt. Das Verhältnis von Feststoff zu Flüssigkeit beträgt dabei vorzugsweise zwischen 1:1 bis 1:4, besonders bevorzugt 1:2.

Durch die Friktionswäsche wird die PET-Feuchtigkeit reduziert, was bedeutet, dass die verringerte Hydrolyse einen geringeren Molmassenabbau bei der Aufbereitung bewirkt. Weiterhin werden Fremdpolymere wie Polystyrol (PS) und Polyvinylchlorid (PVC) gelöst. Diese können mittels konventioneller Dichtetrennung meist nur unzureichend aus PET-Fraktionen abgetrennt werden. Ebenso ist es möglich, Verbunde, z. B. Trays, Blister oder Multilayer-Flaschen aufzutrennen. Durch Anquellen der PET-Matrix werden außerdem die löslichen Störstoffe, z. B. Farbadditive, wesentlich effektiver extrahiert als bei einer Heiß-Wasser-Wäsche.

Bei der Friktionswäsche handelt es sich um eine intensive Wäsche mit hohem Eintrag von Turbulenz- und Friktionsenergie durch die verwendeten Rührer. Die Friktionswäsche bringt einen erfindungswesentlichen Vorteil mit sich, dass auch die im PET-Mischabfall vielfach enthaltenen Polymer-Verbunde (PET/PE, PET/PE/PA) durch Auflösen des Verbundes einer nachfolgenden Dichtetrennung, z. B. Schwimm-Sink-Trennung, zugänglich werden.

In einer bevorzugten Ausführungsform des Verfahrens wird vor der Auflösung des Polyesters oder Polyestergemisches in einem Solvens eine Friktionswäsche der Abfälle mit dem Solvens für den Polyester oder das Polyestergemisch durchgeführt. Dies bietet sich besonders bei einem Recycling von Verbundsystemen, z.B. von Trays, siegelbaren tiefgezogenen Verbundfolien oder Flaschen aus PET-Verbundsystemen, an. Hierbei handelt es sich häufig um mehrschichtige Systeme, die aus einer PET-Schicht bestehen, die wiederum mit einer weiteren Polymer-Schicht verklebt ist. Das Verfahren ist nun so ausgerichtet, dass die Friktionswäsche bei einer Temperatur durchgeführt wird, die auf der einen Seite das Lösen der Polymere nicht zulässt, auf der anderen Seite aber den Klebstoff löst. Dies führt dazu, dass das vom PET verschiedene Polymer des Verbundsystems durch anschließende Dichtetrennung, z.B. Schwimm-Sink-Trennung, separiert werden kann.

Als zweiter Schritt der Vorreinigung kann vorzugsweise eine Dichtetrennung im Lösemittel durchgeführt, wobei zunächst die Abfälle abgespült werden und ein Auffüllen bis zu einem Verhältnis zwischen Feststoff und Flüssigkeit von 1:4 erfolgt. Die ungelösten und aus den Verbundmaterialien freigesetzten Polyolefine werden dann als Schwimmfraktion abgetrennt. Diese Art der Verbundtrennung ist mit den bislang bekannten Verfahren nicht realisierbar.

Das Auflösen des Polyesters im Solvens erfolgt in analoger Weise, wie in der DE 100 17 707 beschrieben, auf deren Offenbarungsgehalt hiermit ausdrücklich verwiesen wird. Erfindungswesentlich hierbei ist es, dass das gleiche Solvens wie bei der Friktionswäsche verwendet wird, was erhebliche prozessökonomische Vorteile mit sich bringt.

Eine Weiterentwicklung gegenüber diesem Verfahren besteht jedoch darin, dass vorzugsweise Filtrationshilfsmittel für die sich anschließende Reinigung der PET-Lösung zugesetzt werden.

In einer vorteilhaften Weiterbildung können nach Auflösen des Polyesters im Solvens die ungelösten inerten Partikel, z. B. Aluminium, Polyamid, Glas, Sand usw. aus der Lösung filtriert werden. Im Anschluss erfolgt dann vorzugsweise eine Feinfiltration oder Schwerkraftabscheidung der Füllstoffe und gegebenenfalls weiterer Störstoffe, mit dem Filtrationshilfsmittel.

Anhand der folgenden Figuren und dem folgenden Beispiel soll der anmeldungsgemäße Gegenstand näher erläutert werden, ohne diesen jedoch auf die Breite des Ausführungsbeispiels einzuschränken.

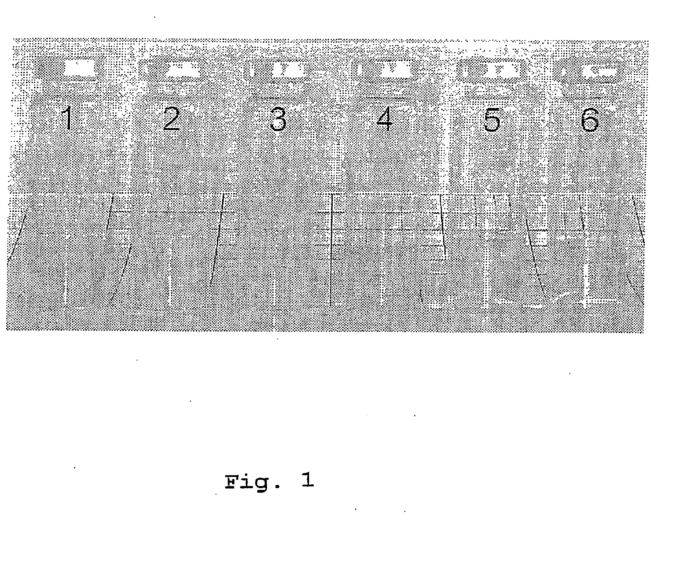

In Fig. 1 sind 6 PET-Proben, die nach unterschiedlichen Aufbereitungsverfahren behandelt wurden, dargestellt. Hierbei bedeuten:
1 = Recyclat aus PET-Mischabfall ohne Filtration und DBE-Nachwäsche
2 = Recyclat aus PET-Mischabfall ohne Filtration mit DBE-Nachwäsche oder Abpressen
3 = Recyclat aus PET-Mischabfall mit Papier-Faltenfilter filtriert
4 = Recyclat aus PET-Mischabfall mit Druckfiltration durch CaCO₃, Wachs
5 = Recyclat aus PET-Mischabfall mit Druckfiltration durch CaCO₃ und Alkanfällung
6 = Referenz-PET, weißer Mehrweg-Flaschenshredder

Von allen Produkten wurden 10 %-ige TFA-Lösungen angesetzt.

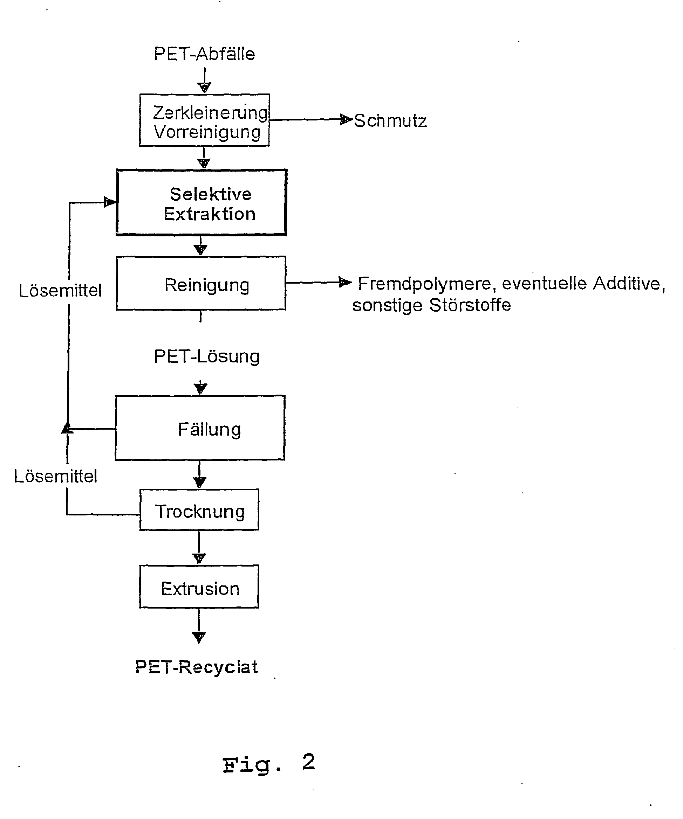

Fig. 2 zeigt den schematischen Verfahrensablauf des erfindungsgemäßen Verfahrens.

Auf Einzelheiten der Verfahrensschritte wird im nachfolgenden Beispiel eingegangen.

### Beispiel

### Recycling von PET

Die Vorreinigung wird zweistufig in Form einer Friktionswäsche und anschließender Schwimm-Sink-Trennung durchgeführt.

### Friktionswäsche:

Zur Abtrennung des PVC- und löslichen Fremdpolymer-Restgehaltes sowie zur Entfernung von weiteren Verunreinigungen wie z. B. Staub und Feinstpartikeln werden Extraktionen des PET-Abfalls mit DBE deutlich unterhalb der PET-Lösetemperatur und unter Eintrag von ausreichend Rührenergie durchgeführt. Diese Friktionswäsche erfolgt in einem temperierbarem doppelwandigen Glasgefäß mit einem Bodenauslass und mit einem Nutzvolumen von 1 1 bei jeweils konstanter Temperatur (105 °C bei der DBE-Extraktion). Die S/L-Verhältnisse werden auf 1:2 eingestellt (200 g Flakes plus 400 g Lösemittel). Zum Rühren steht ein 2-Blatt-Rührer mit 60 mm Durchmesser zur Verfügung, der in 25 mm Abstand vom Behälterboden positioniert ist und mittels Rührwerksantrieb bei 500 U/min betrieben wird. Nach 60 min. Extraktionsdauer wird der Rührer ausgeschaltet und die Fremdpolymer enthaltende Lösung abgelassen.

Ergebnis: Bezogen auf die Polymereinwaage ergibt sich für die PET-Mischung ein extrahierbarer Fremdpolymer-Anteil von etwa 7 %. Eine zweite Nachextraktionsstufe lohnt nicht und wird lediglich als Nachspülen ohne längere Verweilzeiten in der anschließenden Schwimm-Sink-Trennung durchgeführt.

### Schwimm-Sink-Trennung:

Die Schwimm-Sink-Trennung erfolgt im selben 1-1 Glasbehälter wie die Friktionswäsche. Die feuchten PETflakes werden mit DBE bis zu einem S/L-Verhältnis von 1:4 aufgefüllt (gewaschene Flakes plus 800 g Lösemittel). Aufgrund ihrer geringeren Dichte treiben dabei bereits die ersten Polyolefin-flakes nach oben und sammeln sich an der Flüssigkeitsoberfläche. Der 2-Blatt-Rührer wird so betrieben, dass sich eine überwiegend laminare Strömung ausbildet und die nach oben treibenden Polyolefin-flakes nicht wieder nach unten "eingerührt" werden. Die Drehzahl beträgt etwa 50 U/min. Die aufschwimmenden Polyolefine werden mittels Sieb von der Oberfläche abgeschöpft.

Ergebnis: Nach Auswiegen der abgetrennten flakes wurde der Polyolefinanteil mit 2 % ermittelt.

### Lösen ("Selektive Extraktion"):

In einen 1 Liter Dreihalskolben werden 475 g DBE und 5 g CaCO₃ gegeben. Die Suspension wird, unter ständigem Rühren, über Nacht mit Stickstoff begast. Nach dem Aufheizen auf Siedetemperatur ϑ = 207 °C (auch hier permanente Begasung mit Stickstoff) erfolgt, unter ständigem Rühren, die Zugabe von 25 g PET (vorgereinigt, gefriergetrocknet). Die Siedetemperatur steigt nach fünf Minuten auf ϑ = 212 °C. Die gesamte Lösezeit, bis zur Filtration, beträgt 10 min.

### Filtration ("Reinigung") :

Die zur Filtration verwendete, beheizbare, Druckfiltrationskartusche wird mit einem "Schwarzband"-Papierfilter bestückt auf den eine ca. 6 mm dicke Schicht aus CaCO₃ aufgebracht ist. Anschließend wird der Filter auf ϑ = 205 °C (Öl temperatur ϑ = 215 °C) aufgeheizt. Anschließend erfolgt die Filtration der PET/DBE Lösung bei einem Differenzdruck von 2 bar.

Zu Vergleichszwecken wird sowohl eine thermische Fällung als auch eine Fällung mit Fällmittel durchgeführt.

### Thermische Fällung:

Etwa die Hälfte des Filtrats wurde in eine Aluminiumschale abgelassen. Beim anschließenden Abkühlen bis auf Raumtemperatur erstarrt die Lösung zu einem PET-Gel mit wachsartiger Konsistenz.

### Fällung mit Fällmittel:

Die andere Hälfte der filtrierten Lösung (ca. 250 ml) wird in einen vorgeheizten Dreihalskolben filtriert. Der Kolben wird anschließend wieder auf Siedetemperatur aufgeheizt. Die Fällung erfolgt durch Zugabe von 25 g eines technischen Alkangemisches (ϑ = 205 °C). Während des Abkühlens bildet sich bei einer Temperatur von ϑ = 165 °C voluminöse Flocken, die sich bis zum Ende der Fällung (ϑ = 148 °C) zu einem feinen, griesartigen Niederschlag verfestigen.

Die nach dem Verfahren erhaltenen Filtrate waren glasklar und leicht grün gefärbt. Durch ein nochmaliges Aufheizen vor der Fällung verfärbte sich die klare Lösung leicht hellbraun.

Für die Nachbehandlung der Produkte, also der PET-Recyclate wurden zwei Alternativen gewählt. Nach dem ersten Weg erfolgte ein dreimaliges Waschen des Fällprodukts mit der doppelten Menge an Aceton. Hierbei konnte die Braunfärbung praktisch vollständig entfernt werden. Als weiterer Weg wurde das PET-Recyclat auf einer Schneckenpresse bis auf ein Trockengewicht (TS) von 20 % auf 70 % abgepresst. Die abgepresste Flüssigkeit trennt sich in zwei separierbare Phasen. Die Braunfärbung ist vollständig in der Solvens verblieben.

Im Folgenden ist in Tabelle 1 der zeitliche Verfahrensablauf dargestellt.

**Tabelle 1:**

| Zeit in Minuten | Bemerkung | Temperatur |
|---|---|---|
| 0:00 | Zugabe von PET | 207 °C |
| 5:00 | | 212 °C |
| 10:00 | Anfang der Filtration | |
| 20:00 | Ende der Filtration | |
| 28:00 | Fällung mit Alkan | |
| 33:00 | Ausbildung der ersten Flocken | 165 °C |
| 36:00 | Ende der Fällung | 148 °C |

### Ergebnis-Bewertung durch TFA Lösungen:

Von allen Produkten wurden 10%-ige TFA-Lösungen angesetzt (siehe Figur 1)

## Patentansprüche

1. Verfahren zum Recycling von Polyestern oder Polyestergemischen aus polyesterhaltigen Abfällen mit den folgenden Schritten:
- Auflösen des Polyesters oder Polyestergemisches in einem Solvens sowie
- Ausfällung von rieselfähigen Partikeln des Polyesters oder des Polyestergemisches mit einem Fällmittel,
**dadurch gekennzeichnet ,**
**dass** sich bei der Ausfällung das Fällmittel mit der Lösung des Polyesters oder Polyestergemisches einphasig mischt und beim Abkühlen das Fällmittel und das Solvens sich in zwei Phasen trennen.

2. Verfahren nach Anspruch 1,
**dadurch gekennzeichnet, dass** die Mischung der Lösung mit dem Fällmittel bei der Ausfällung bei einer Temperatur von 180 bis 220°C, insbesondere 190 bis 212 °C erfolgt und anschließend auf 50 bis 120°C, insbesondere 60 bis 100 °C abgekühlt wird.

3. Verfahren nach einem der Ansprüche 1 oder 2,
**dadurch gekennzeichnet, dass** die zwei Phasen mechanisch separiert werden und für das Verfahren wiedereinsetzbar sind.

4. Verfahren nach einem der vorhergehenden Ansprüche,
**dadurch gekennzeichnet, dass** als Fällmittel unpolare Substanzen wie aliphatische Kohlenwasserstoffe oder Gemische wie Petrolether und Benzine verwendet werden.

5. Verfahren nach Anspruch 4,
**dadurch gekennzeichnet, dass** als Fällmittel n-Alkane und/oder iso-Alkane verwendet werden.

6. Verfahren nach einem der vorhergehenden Ansprüche,
**dadurch gekennzeichnet, dass** vor der Auflösung eine Friktionswäsche der Abfälle mit dem Solvens für den Polyester oder das Polyestergemisch durchgeführt wird.

7. Verfahren nach einem der vorhergehenden Ansprüche,
**dadurch gekennzeichnet, dass** die Friktionswäsche bei einer geringeren Temperatur als der Lösetemperatur des Polyesters, insbesondere zwischen 50 und 120 °C erfolgt.

8. Verfahren nach einem der vorhergehenden Ansprüche,
**dadurch gekennzeichnet, dass** nach der Friktionswäsche in einem weiteren Schritt eine Abtrennung von Polyolefinen als Schwimmfraktion mittels Dichtetrennung erfolgt.

9. Verfahren nach Anspruch 6,
**dadurch gekennzeichnet, dass** die polyesterhaltigen Abfälle Verbundsysteme aus Polyester und Polyolefinen enthalten und die Friktionswäsche bei einer Temperatur durchgeführt wird, die die Abtrennung der Polyolefine vom Polyester oder Polyestergemisch ermöglicht.

10. Verfahren nach einem der vorhergehenden Ansprüche,
**dadurch gekennzeichnet, dass** als Solvens ein Dicarbonsäuredialkylester oder ein Dicarbonsäuredialkylestergemisch verwendet wird.

11. Verfahren nach Anspruch 8,
**dadurch gekennzeichnet, dass** als Solvens Dimethylester oder Diethylester von Oxalsäure, Malonsäure, Bernsteinsäure, Glutarsäure und/oder Adipinsäure verwendet werden.

12. Verfahren nach einem der vorhergehenden Ansprüche,
**dadurch gekennzeichnet, dass** beim Auflösen des Polyesters oder des Polyestergemisches ein Filtrationshilfsmittel zugesetzt wird.

13. Verfahren nach einem der vorhergehenden Ansprüche,
**dadurch gekennzeichnet, dass** nach Auflösen des Polyesters im Solvens in einem zusätzlichen Schritt eine Abtrennung ungelöster inerter Partikel, Füllstoffe und gegebenenfalls weiterer Störstoffe aus der Lösung mittels Fest-Flüssig-Trennung erfolgt.

14. Verfahren nach Anspruch 13,
**dadurch gekennzeichnet, dass** die Abtrennung der ungelösten inerten Partikel durch Filtration erfolgt.

15. Verfahren nach Anspruch 13 oder 14,
**dadurch gekennzeichnet, dass** die Abtrennung der Füllstoffe und der gegebenenfalls weiteren Störstoffe durch Feinfiltration und/oder Schwerkraftabscheidung erfolgt.

16. Verfahren nach einem der vorhergehenden Ansprüche,
**dadurch gekennzeichnet, dass** die rieselfähigen Partikel aus dem Polyester oder dem Polyestergemisch anschließend abgepresst und getrocknet werden.

17. Verfahren nach einem der vorhergehenden Ansprüche,
**dadurch gekennzeichnet, dass** Polyethylenterephthalat (PET) und/oder Polybutylenterephthalat (PBT) enthaltende Abfälle verwendet werden.

## Claims

1. Method for recycling polyesters or polyester mixtures from waste containing polyester with the following steps:
• dissolving the polyester or polyester mixture in a solvent and
• precipitating flowable particles of the polyester or polyester mixture with a precipitant,
**characterised in that** during precipitation the precipitant is mixed in a single phase with the solution of the polyester or polyester mixture and during cooling the precipitant and the solvent separate into two phases.

2. Method according to claim 1, **characterised in that** during precipitation mixing of the solution with the precipitant occurs at a temperature of 180° to 220°C, in particular 190° to 212°C, and the mixture is then cooled to 50° to 120°C, in particular 60° to 100°C.

3. Method according to one of claims 1 or 2, **characterised in that** the two phases are separated mechanically and are reusable for the process.

4. Method according to one of the preceding claims, **characterised in that** non-polar substances such as aliphatic hydrocarbons or mixtures such as petroleum ethers or benzines are used as precipitant.

5. Method according to claim 4, **characterised in that** n-alkanes and/or isoalkanes are used as precipitant.

6. Method according to one of the preceding claims, **characterised in that** before dissolution a friction wash of the waste is conducted with the solvent for the polyester or the polyester mixture.

7. Method according to one of the preceding claims, **characterised in that** the friction wash is conducted at a lower temperature than the dissolving temperature of the polyester, in particular between 50° and 120°C.

8. Method according to one of the preceding claims, **characterised in that** a separation of polyolefins as floating fraction is conducted by means of density separation in a further step after the friction wash.

9. Method according to claim 6, **characterised in that** the waste containing polyester contains composite systems composed of polyester and polyolefins and the friction wash is conducted at a temperature, which enables the polyolefins to be separated from the polyester or polyester mixture.

10. Method according to one of the preceding claims, **characterised in that** a dialkyl dicarboxylic ester or a dialkyl dicarboxylic ether mixture is used as solvent.

11. Method according to claim 8, **characterised in that** dimethyl esters or diethyl esters of oxalic acid, malonic acid, succinic acid, glutaric acid and/or adipic acid are used as solvent.

12. Method according to one of the preceding claims, **characterised in that** a filtration aid is added during the dissolution of the polyester or the polyester mixture.

13. Method according to one of the preceding claims, **characterised in that** after the polyester is dissolved in the solvent, a separation of undissolved inert particles, fillers and any further interfering substances from the solution is conducted in an additional step by means of solid-liquid separation.

14. Method according to claim 13, **characterised in that** the separation of the undissolved inert particles is conducted by filtration.

15. Method according to claim 13 or 14, **characterised in that** the separation of the fillers and any further interfering substances is conducted by fine filtration and/or gravity separation.

16. Method according to one of the preceding claims, **characterised in that** the flowable particles of the polyester or the polyester mixture are subsequently pressed out and dried.

17. Method according to one of the preceding claims, **characterised in that** waste containing polyethylene terephthalate (PET) and/or polybutylene terephthalate (PBT) is used.

## Revendications

1. Procédé de recyclage de polyesters ou de mélanges de polyesters formés de déchets contenant des polyesters ce procédé comprenant les étapes suivantes :
- dissolution du polyester ou du mélange de polyesters dans un solvant, et
- précipitation des particules du polyester ou du mélange de polyesters, coulables, à l'aide d'un agent de précipitation,
**caractérisé en ce que**
lors de la précipitation, l'agent de précipitation se mélange à la solution du polyester ou du mélange de polyesters, selon une phase unique et lors du refroidissement, l'agent de précipitation et le solvant se séparent en deux phases.

2. Procédé selon la revendication 1,
**caractérisé en ce que**
le mélange de la solution et de l'agent de précipitation lors de la précipitation, s'effectue à une température comprise entre 180°C et 220°C, notamment de 190°C à 212°C puis est refroidit à une température de 50°C à 120°C, notamment de 60°C à 100°C.

3. Procédé selon la revendication 1 ou 2,
**caractérisé en ce que**
les deux phases sont séparées mécaniquement et sont réutilisables dans le procédé.

4. Procédé selon l'une des revendications précédentes,
**caractérisé en ce que**
comme agent de précipitation on utilise des substances non polaires telles que des hydrocarbures aliphatiques ou des mélanges tels que les éthers de pétrole et les essences minérales.

5. Procédé selon la revendication 4,
**caractérisé en ce que**
comme agent de précipitation, on utilise des n-alcanes et/ou des iso-alcanes.

6. Procédé selon l'une des revendications précédentes,
**caractérisé en ce qu'**
avant la dissolution, on effectue un lavage par friction des déchets avec le solvant du polyester ou du mélange de polyesters.

7. Procédé selon l'une des revendications précédentes,
**caractérisé en ce que**
le lavage par friction se fait à une température plus faible que la température de dissolution du polyester en particulier entre 50°C et 120°C.

8. Procédé selon l'une des revendications précédentes,
**caractérisé en ce qu'**
après le lavage par friction, on effectue au cours d'une autre étape, une séparation de polyoléfines constituant une fraction surnageante par une séparation par gravité.

9. Procédé selon la revendication 6,
**caractérisé en ce que**
les déchets contenant des polyesters renferment des systèmes composites de polyesters et de polyoléfines et le lavage par friction est effectué à une température permettant la séparation des polyoléfines du polyester ou du mélange de polyesters.

10. Procédé selon l'une des revendications précédentes,
**caractérisé en ce que**
comme solvant, on utilise un di-alkylester d'acide di-carboxylique ou un mélange de di-alkylester d'acide di-carboxylique.

11. Procédé selon la revendication 8,
**caractérisé en ce que**
comme solvant, on utilise du diméthylester ou du di-éthylester d'acide oxalique, d'acide malonique d'acide succinique, d'acide glutamique et/ou d'acide adipique.

12. Procédé selon l'une des revendications précédentes,
**caractérisé en ce que**
lors de la dissolution du polyester ou du mélange de polyesters, on ajoute un adjuvant de filtration.

13. Procédé selon l'une des revendications précédentes,
**caractérisé en ce qu'**
après la dissolution du polyester dans un solvant, on effectue, au cours d'une étape supplémentaire, une séparation des particules inertes non dissoutes, des charges et le cas échéant d'autres matières gênantes, de la solution en utilisant une séparation solide/liquide.

14. Procédé selon la revendication 13,
**caractérisé en ce que**
la séparation des particules inertes non dissoutes se fait par filtration.

15. Procédé selon la revendication 13 ou 14,
**caractérisé en ce que**
la séparation des charges et le cas échéant d'autres matières gênantes, se fait par filtration fine et/ ou par séparation par gravitation.

16. Procédé selon l'une des revendications précédentes,
**caractérisé en ce que**
les particules coulantes formées du polyester et du mélange de polyesters sont ensuite comprimées et séchées.

17. Procédé selon l'une des revendications précédentes,
**caractérisé en ce qu'**
on utilise des déchets contenant du polyéthylène téréphtalate (PET) et/ou du polybutylène téréphtalate (PBT).
